# EUROPEAN PATENT APPLICATION

(11) **EP 4 588 550 A1**
(43) Date of publication of application: **23.07.2025**
(21) Application number: 25151823.9
(22) Date of filing: 14.01.2025
(51) Int. Cl.: B01D 53/14

(54) **PLANT AND PROCESS FOR THE REGENERATION OF AT LEAST ONE ABSORBENT SOLUTION IN ORDER TO DEPRIVE IT IN WHOLE OR IN PART OF AT LEAST ONE GAS, SUCH AS FOR EXAMPLE CO2**

(30) Priority: 15.01.2024 IT 202400000618
(71) Applicant: Giammarco Technologies S.r.l., 30135 Venezia (IT)
(72) Inventor: GIACOPINI, Walter, 30135 Venezia (IT)
(74) Representative: Feltrinelli, Secondo Andrea

(57) **Abstract**

The present invention relates to a plant or plant station for the regeneration of at least one absorbent solution in order to deprive it in whole or in part of at least one gas, such as for example CO₂, from gas mixtures.

## Description

### TECHNICAL FIELD OF THE INVENTION

The present invention relates to a plant for the regeneration of at least one absorbing solution to remove, in whole or in part, at least one gas, such as CO₂, previously absorbed within it, or for the selective absorption or removal of at least one gas, such as CO₂, from gas mixtures. The invention also pertains to a process that can be implemented using the aforementioned plant.

### STATE OF THE PRIOR ART

Known processes for the selective removal of gases from gas mixtures containing them tipically involve an initial absorption phase in a column, where the gases to be removed chemically react with an absorbing solution, and a final regeneration phase in one or more columns, where the gases absorbed and chemically bound to the absorbing solution are released through the external supply of heat and/or steam, provided directly or indirectly, in order to recycle the regenerated solution back to the absorption phase.

Particularly important in industrial applications are processes for the selective removal of CO₂ from gas mixtures containing it through the use of specific absorbing solutions.

Some of these processes are taught by the following patents: US3851041, US3896212, US3932582, US4271132, US3563695, US3642430, US3685960, US4035166, US3659401, US3714327, US3962404, US4073863.

It is well known that in the chemical absorption processes of CO₂ from gas mixtures containing it, a critical operational issue is the need for an external heat supply to regenerate the CO₂-absorbing solution, as the CO₂ desorption reaction required to recycle the solution to the absorption phase is highly endothermic.

However, a heat source is not always available or may be available only in limited quantities, as in contexts not served by a natural gas network. In other scenarios, there are plants where steam production is present, but it is preferable not to access this network to avoid modifications to the existing plant. In such cases, generating heat to meet the demands of the CO₂ removal process represents a significant challenge.

### OBJECTS OF THE INVENTION

One object of the present invention is to provide a new plant for the regeneration of at least one absorbing solution to remove, in whole or in part, at least one gas, such as CO₂, previously absorbed within it, or for the selective absorption or removal of at least one gas, such as CO₂, from gas mixtures, as well as a related process.

Another object of the present invention is to provide a plant that is simpler and cheaper than existing plants.

Another object of the present invention is to provide a plant as described above that can optimally utilize its intrinsic characteristics.

In accordance with one aspect of the invention, a plant is provided as defined in claim 1 or claim 3.

In accordance with another aspect of the invention, a process is provided as defined in claim 9 or claim 16.

The dependent claims refer to preferred and advantageous embodiments of the invention.

### BRIEF DESCRIPTION OF THE DRAWINGS

Other features and advantages of the invention will become more apparent from the description of embodiments of a plant according to the present invention, illustrated by way of example in the accompanying drawings, in which:
- figures 1 to 8 show respective embodiments of a plant according to the present invention for the absorption of at least one gas, such as CO₂, from gas mixtures;
- figures 9 to 12 show respective embodiments of a plant or plant station according to the present invention for the regeneration of at least one absorbing solution to remove, in whole or in part, at least one gas, such as CO₂, previously absorbed within it.

In the accompanying drawings, identical parts or components are indicated by the same reference numbers.

### EMBODIMENTS OF THE INVENTION

In the present description the expressions "duct" or "line" may refer to a single pipe or duct or even a series of sections or segments of pipes or ducts that are connected or in continuity with each other so as to allow the respective fluid, gas, or liquid to flow within them without any leaks or spills occurring, but which sections or segments of pipe or duct are arranged sequentially and in fluid communication by direct or indirect connection, that is, in physical contact or in communication through system components, such as heat exchangers or compressors or pumps, which cause a variation in the temperature and/or pressure of the fluid, gas, or liquid, but preferably not a withdrawal or addition of fluid in the transition from one section or segment to another, for instance in the case of possible purges or drains. Clearly, the various sections or segments of pipe or duct could also have different cross-sections.

Moreover, in the present description, the expressions "upstream" and "downstream" are related to the direction of fluid flow in the plant and, with reference, for example, to a first and a second component on the fluid delivery line, the expression "the first component is upstream of the second component" indicates that the first component of the system is placed before the second component and therefore processes the plant fluid before or immediately before it is processed by the second component, while the expression "the first component is downstream of the second component" indicates that the first component of the plant is placed after the second component and therefore processes the plant fluid after or immediately after it has been processed by the second component.

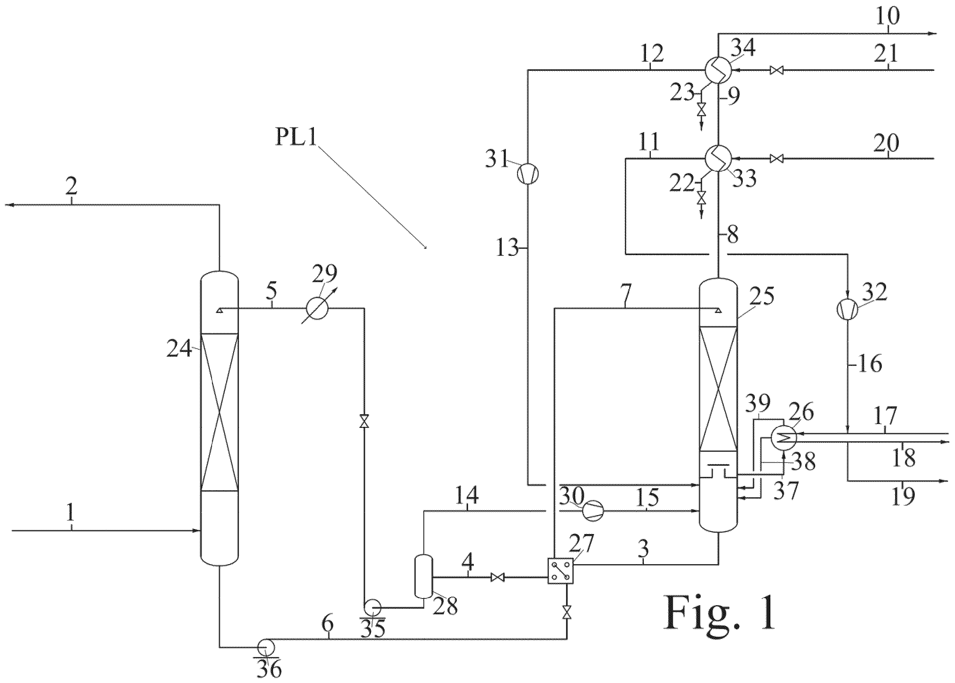

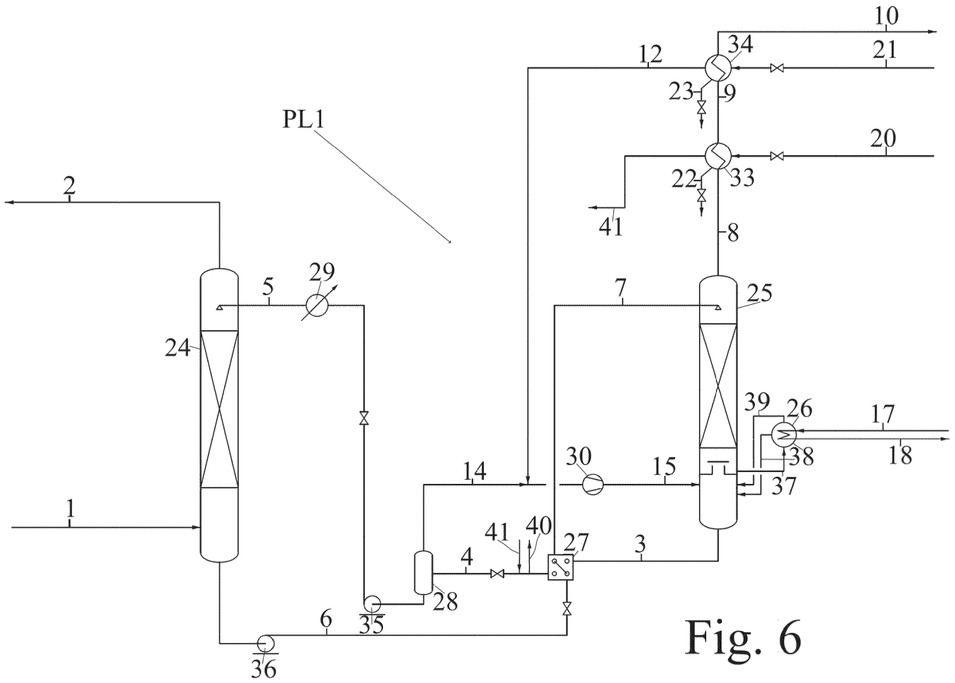

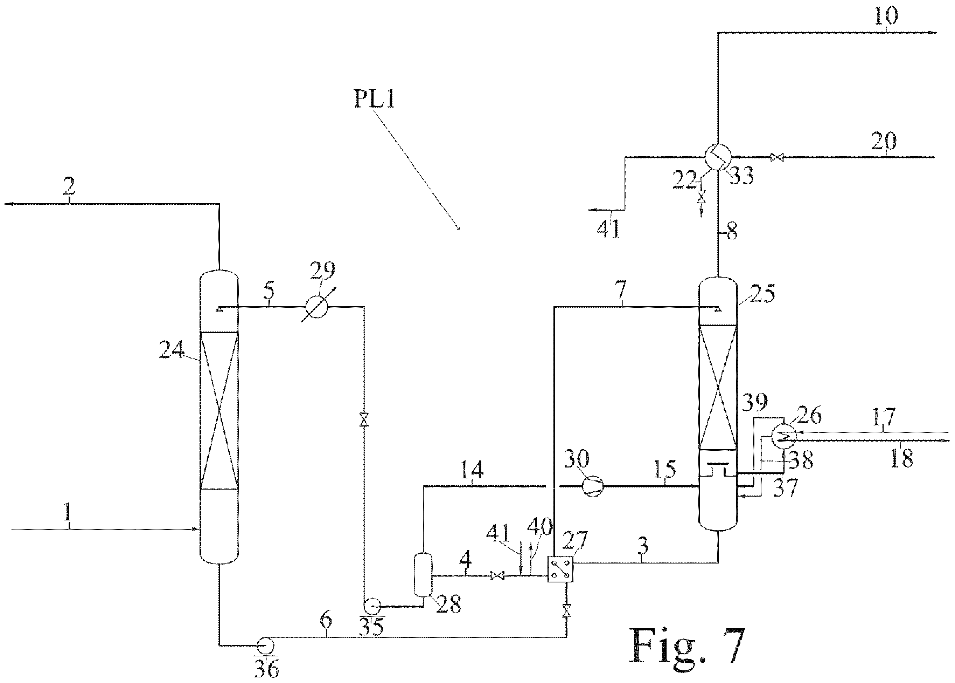

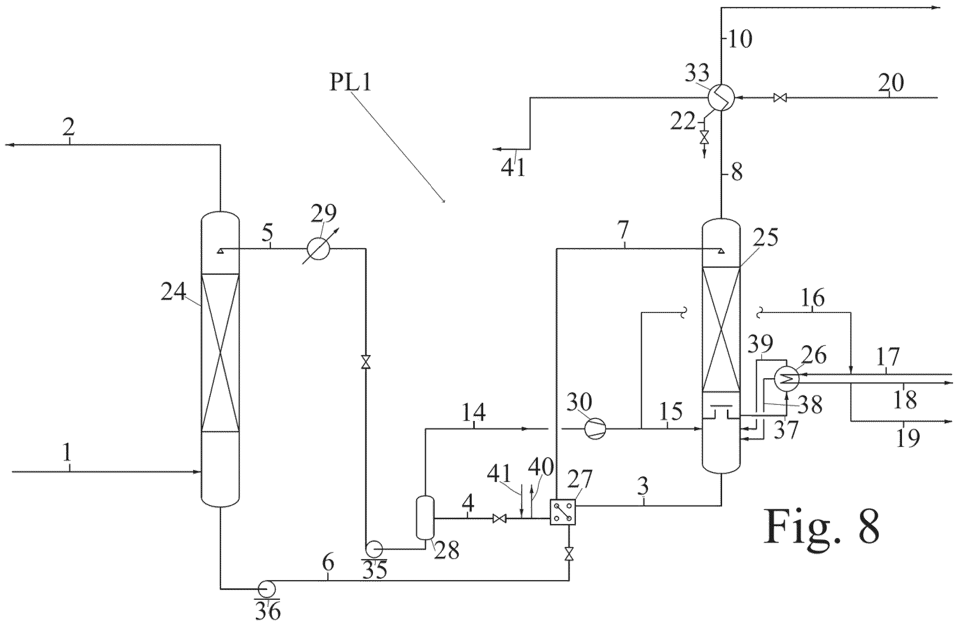

Referring to figures 1 to 8, a plant, PL1, for absorbing at least one gas, such as CO₂, from gas mixtures, e.g., flue gases from combustion processes, is illustrated.

The PL1 plant includes in detail at least one absorption column 24, of any suitable type, for at least one gas from a gaseous mixture, at least one first feed duct 1 for a gaseous mixture to the bottom of the absorption column 24, as well as at least one first inlet duct 5 for at least one absorbent solution, possibly aqueous, to the top of the absorption column 24.

The at least one absorbent solution can be of any suitable type, for example, it may be selected from the group consisting of aqueous solutions of primary, secondary, tertiary ethanolamines or mixtures thereof, complex ethanolamines, including the family of sterically hindered amines, or solutions of alkaline metal carbonates, simple or activated with the addition of glycine or other amino acids, primary, secondary, tertiary ethanolamines or mixtures thereof, complex ethanolamines including the family of sterically hindered amines, inorganic promoters such as arsenic oxides, borates, and others.

It will be noted in particular that these types of absorbent solutions, while having different chemical/physical characteristics, are united by a similar plant configuration in the main sections (CO₂ absorption, thermal regeneration of the absorbent solution, solution/solution heat exchanger, cooling section of the desorbed CO₂ during the regeneration phase, etc.).

In the PL1 plant, at least one first outlet duct 2 for the gas mixture is provided, stripped in whole or in part, for example at least 80%, preferably between 80% and 95%, of at least one gas by the action of at least one absorbing solution, from the top of the first absorption column 24, as well as at least one first collecting duct 6 from the bottom of the absorption column 24 for at least one absorbing solution with at least one gas absorbed within it. Clearly, a pump 36 can be provided to intercept the first collecting duct 6 and push the liquid within it.

The PL1 system is also equipped with a station or unit or part of the plant for the regeneration of at least one absorbent solution in order to deprive it, in whole or in part, of at least one gas, such as CO₂, previously absorbed within it, which includes at least one regeneration column 25, of any suitable type for the at least one absorbent solution used in the absorption column 24, which is served by respective ducts or lines as well as, among other things, equipped with heat exchanger(s) and compressor(s).

In this regard, the PL1 plant or the station or unit or part of the plant mentioned above specifically includes:
- at least one second duct or supply line 7 for at least one absorbing solution with at least one gas absorbed within it, from the top or upper part of at least one regeneration column 25, which second supply duct 7 is in fluid communication with the first collecting duct 6 so that the fluid withdrawn through duct 6 is then conveyed into the second duct 7, optionally with the interposition of a heat exchanger 27 (to be described later) for heating the fluid within it, i.e. the duct 7 receives all or a percentage of at least 60%, 70%, 80%, or 90% of the fluid from duct 6.
- at least one second duct or inlet line 13, 15, 39, for a regeneration fluid of at least one absorbing solution from the bottom or lower part of the regeneration column 25, meaning that this at least second duct preferably opens directly into a respective section of the regeneration column 25.
- at least one second duct or outlet line 8 for a gaseous compound comprising the regeneration fluid with at least one gas desorbed from the absorbing solution, from the top or upper part of the regeneration column 25,
- a second duct or collecting line 3 from the bottom or lower part of the regeneration column 25 for at least one regenerated absorbing solution, i.e. devoid in whole or in part of at least one gas absorbed within it through the action of the regeneration fluid, which second collecting duct 3 is in fluid communication with the first inlet duct 5 for supplying at least one regenerated absorbing solution to the latter, meaning that duct 5 receives all or a percentage of at least 60%, 70%, 80%, or 90% of the fluid from duct 3.

Clearly, the term "bottom" with reference to the absorption column 24 or regeneration column 25 refers to a lower zone of these columns, but not necessarily the lowest point, while the term "top" refers to an upper zone of the columns, but not necessarily the highest point.

With reference to absorption in the absorption column 24, this is a chemical absorption, so the absorbed gas, for example CO₂, is not necessarily physically absorbed but is effectively "transformed" into another compound, such as bicarbonate. In this regard, for example, with reference to carbonate solutions, regeneration in column 25 would not be complete, but the regenerated solution might contain about 25% bicarbonate (the compound into which CO₂ has transformed), while the remaining absorbed gas, such as CO₂, would exit through the second outlet duct 8.

As for the regeneration fluid, it is a fluid, particularly a gas or steam, intended to come into contact, preferably countercurrently, with the absorbent solution containing the absorbed gas, such as CO₂, and extract or desorb that gas, or transform it, as described above, thereby completely or partially removing the gas (e.g., CO₂) from the absorbent solution. The regeneration fluid could be any fluid suitable for this purpose, such as a gas or steam introduced from a dedicated source, for example steam obtained from water, or a fluid, preferably a gas, obtained or withdrawn from the regeneration column itself, for example from its bottom, or even from a stream of regenerated absorbent solution, possibly suitably treated, such as steam generated from it following flash.

Moreover, the plant PL1 is also equipped with at least one heat exchanger 33, 34, 26, designed to take (directly 33, 34 or indirectly 26) heat from the gas mixture exiting through the at least one second outlet duct or line 8 from the regeneration column 25 and transfer it to the regeneration fluid or to a fluid for heating the same, thereby heating the regeneration fluid before its introduction through the at least one second inlet duct 13, 15, 39 into the regeneration column 25.

Alternatively or additionally, at least one heat exchanger 27 is designed to take heat from the regenerated absorbent solution exiting through the at least one second collecting duct 3 from the regeneration column 25 and transfer it to at least one absorbent solution containing the gas absorbed along at least one second supply duct 7.

Alternatively or additionally, at least one heat exchanger 33 is designed to take heat from the gas mixture exiting through the at least one second outlet duct or line 8 from the regeneration column 25 and transfer it to the absorbent solution itself, particularly to the regenerated absorbent solution, preferably after it has been cooled by thermal exchange in a heat exchanger 27 with the at least one absorbent solution containing the gas absorbed along at least one second supply duct 7.

At least one compressor 30, 31, 32 is then provided, designed to compress and therefore heat the regeneration fluid or gas or a fluid or gas heating the same, which compressor 30, 31, 32 is preferably located downstream of the or a respective heat exchanger 27, 33, 34, so that it compresses and heats the fluid or gas after the thermal exchange station or step.

The compressor 30, 31, 32 is therefore positioned in line with at least one second inlet duct or line 13, 15 of a regeneration fluid, or a transport duct or line 20-11-16-17-18-19 of the heating fluid for the regeneration fluid, i.e. a duct in thermal exchange with an inlet duct or line 39. Alternatively or additionally, the compressor 30 is positioned intercepting a regeneration or heating fluid feed duct derived as a gas stream (possibly due to flash) from the regenerated absorbent solution, for example cooled by thermal exchange with the absorbent solution containing the gas absorbed along the at least one second supply duct 7, or heated by the gas mixture exiting through at least one second outlet duct or line 8.

Advantageously (see figures 1, 2, 4, 5, 6), the at least one heat exchanger or boiler 34 is designed to put at least one second inlet duct 21-12-13, 21-12-15, 20-11-15 in thermal exchange with the second outlet duct or line 9-10, 8-10, while the at least one compressor 30, 31 is positioned intercepting the second inlet duct or line 12-13, 12-15, 11-15 downstream of at least one heat exchanger 34, so as to compress the fluid transported within it. This heat exchanger 34 could be equipped with a purge 23.

The heat exchanger 34 has been depicted as an external and separate unit with respect to the regeneration column 25, but for construction simplicity, it could be integrated within the column 25 itself.

Preferably (see figures 1-4), the plant is equipped with a transport duct or line 20-11-16-17-18-19 for a fluid, such as water, for heating the regeneration fluid, in which case, the at least one heat exchanger includes at least one first heat exchanger or boiler 33, possibly equipped with a purge 22, designed to put the transport duct 20-11 of the heating fluid in thermal exchange with the second outlet duct 8-9, 8-10, to heat the heating fluid, as well as a second heat exchanger or reboiler 26 designed to put the transport duct 16-17-18-19 and the second inlet duct 39 in thermal exchange for heating or boiling the regeneration fluid.

The heat exchanger 33 is depicted as unit external and separate from the regeneration column 25, but for construction simplicity, it could be integrated within the column itself.

In that case, the at least one compressor 32 is positioned intercepting (and thus compressing the fluid transported inside it) the transport duct 11-16, downstream of at least one first heat exchanger 33 and upstream of the second heat exchanger 26.

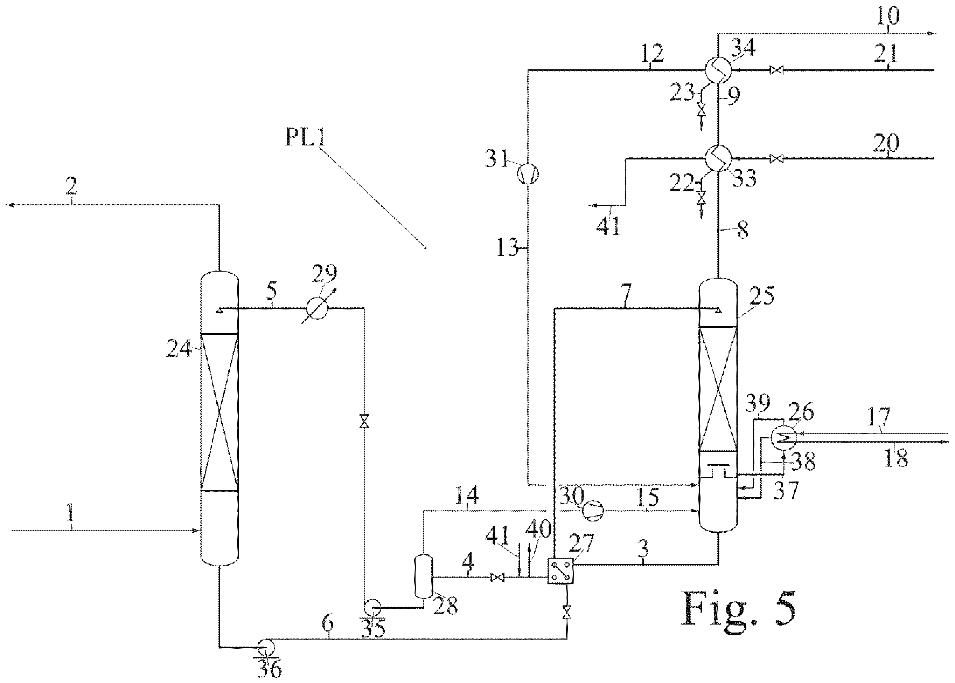

Alternatively (see figures 5-8), the transport duct or line 20 can be fed by the absorbent solution itself, taken, for example, from the second collecting duct or line 3, possibly downstream of a heat exchanger 27 between the fluid in the latter and the fluid fed from the second supply duct 7 or the first collecting duct 6. The boiler or heat exchanger 33 would then extract heat from the gas compound exiting through at least one second outlet duct or line 8 from the regeneration column 25 to transfer it to the absorbent solution itself in duct 20-41.

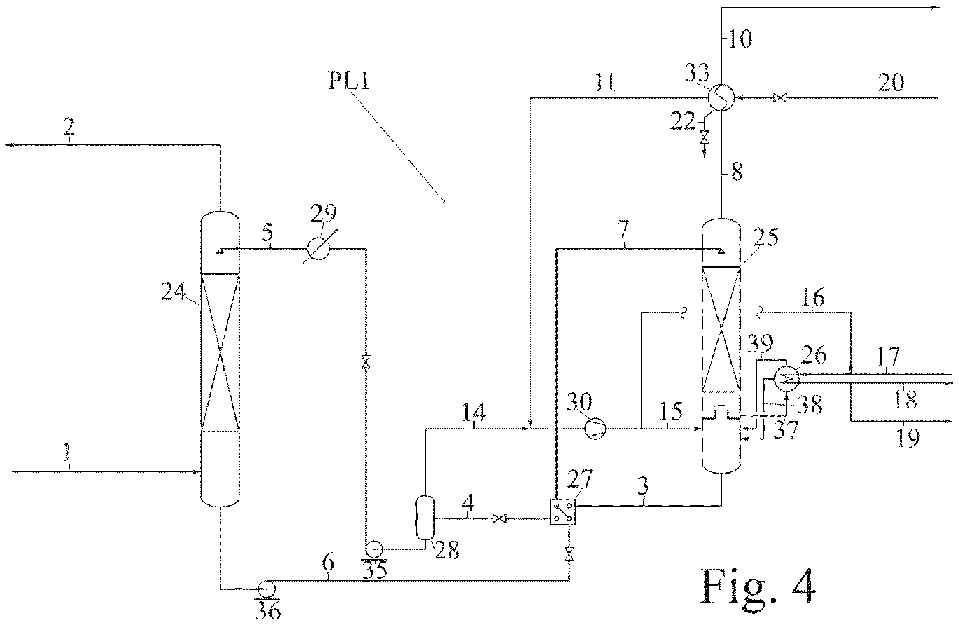

Optionally (see figure 4), at least two second inlet ducts 20-11-15, 39 are provided as well as a transport duct 16-17-18-19 of a fluid for heating the regeneration fluid, which branches off from the first of the second inlet ducts 20-11-15.

In this case, the at least one heat exchanger includes at least one first heat exchanger 33 designed to put the first 20-11-15 of the second inlet ducts into thermal exchange with the second outlet duct 8-10, and it then includes at least one second heat exchanger 26 designed to put the transport duct 16-17-18-19 of the heating fluid into thermal exchange with the second 39 of the inlet ducts for heating the regeneration fluid.

According to this variant, the at least one compressor 30 is positioned intercepting (and thus compressing the fluid transported inside it) the first 11-15 of the second inlet ducts downstream of at least one first heat exchanger 33 and upstream of the branching or exit section of the transport duct 16-17-18-19.

The second inlet duct 39 may further have a section 37 upstream of the second heat exchanger 26, coming from the bottom of the regeneration column 25, and at least one or more sections 38, 39 downstream of the second heat exchanger 26, leading to a level in the regeneration column 25 lower than that originating in the upstream section 37. Thus for example, if the heat exchanger 26 is a phase-separation heat exchanger, there would be a first duct or exit section 39 for directing a gas stream into the regeneration column 25 and a second duct or exit section 38 for directing liquid into the regeneration column 25, the latter would then be extracted from the bottom of the regeneration column 25 and directed to the second collecting duct or line 3. Clearly, in the case of a non-phase-separation heat exchanger 26, the second exit duct or section 38 would not be present, and the duct 39 would direct a biphasic current into the regeneration column 25.

Optionally, the at least one heat exchanger 27 may be, alternatively or additionally, designed to put in thermal exchange the second collecting duct 3 of the at least one regenerated absorbent solution and the second supply duct 7 of the at least one absorbent solution.

In that case, the plant PL1 could also include a flash tank 28 intercepting the second collecting duct 3-4, from the top of which tank, the at least one second inlet duct 14 or a transport duct of the heating fluid of the regeneration fluid would branch off, while from the bottom of the flash tank 28, the first inlet duct 5 would branch off.

Clearly, the expression flash tank refers to a tank in which a flash evaporation occurs, consisting of a partial evaporation, meaning only a portion of the liquid is evaporated, carried out by passing the incoming liquid through a valve or another throttling device.

In this case, the at least one compressor 30 is preferably positioned intercepting the second inlet duct 14, so as to compress and heat the fluid or gas within it downstream of the heat exchanger 27 and, if provided, also downstream of the flash tank 28.

This variant (see figures 5 to 8) could be provided in combination with a boiler or heat exchanger 33 to enable heat exchange between the gaseous compound exiting through the at least one second outlet duct or line 8 from the regeneration column 25 and a transport duct or line 20 for the absorbing solution itself, withdrawn through a section or segment 40, for instance from the second collecting duct or line 3, 4 downstream of the heat exchanger 27.The transport duct or line 20 would then lead, via one or more respective sections or segments 41, always into the second collecting duct or line 3, 4, preferably downstream of the respective entry or withdrawal point 40.

In this case, the transport duct 40, 20, 41 has an inlet or branch starting from the second collecting duct 3-4 upstream of the flash tank 28 and downstream of the heat exchanger 27, which is responsible for enabling heat exchange between the second collecting duct 3 and the second supply duct 7 of the at least one absorbing solution, with the transport duct 40, 20, 41 opening downstream of the inlet or branch and upstream of the flash tank 28. The heat exchanger 33 would instead be responsible for enabling heat exchange between the transport duct 40, 20, 41 and the at least one second outlet duct or line 8, or more precisely, their respective fluids.

In this context, the purpose of the exchanger 33 would not be to generate steam from a water stream, but rather to heat the absorbent solution and then potentially divert it, through the branch represented by a specific section or segment of duct 41, to the same withdrawal point from which it branched off, preferably downstream of the latter. In this case, the aim would be to further heat the solution that, from the second collecting duct or line 3, 4, feeds the flash tank 28, thereby producing more flash vapor to compress as described above 14-30-15.

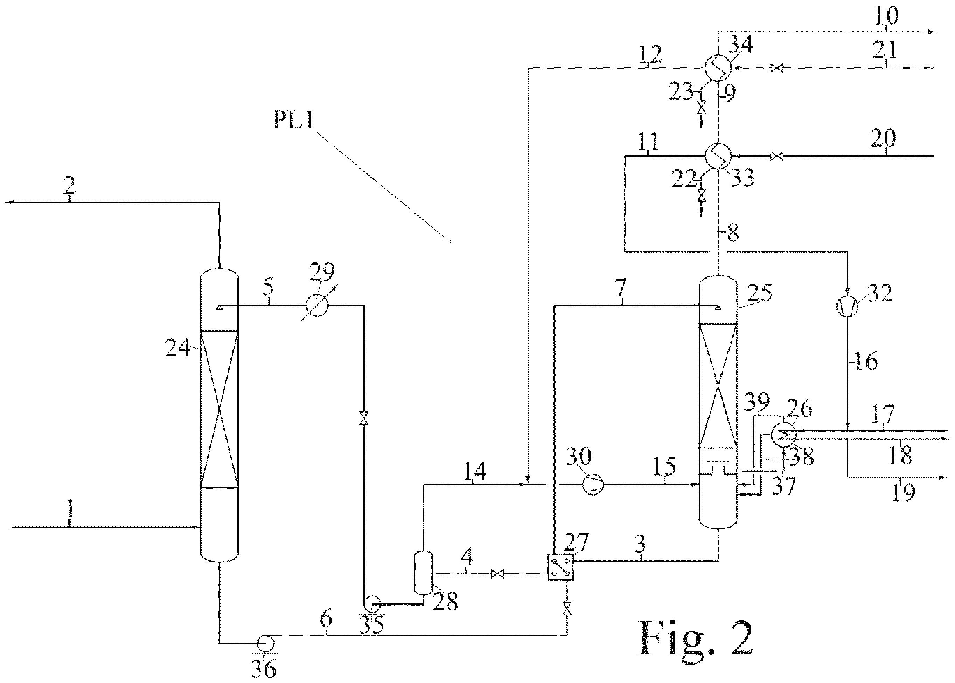

If desired (see figures 2, 4, and 6), the at least one second inlet duct 21-12 or duct for transporting heating fluid 20-11 thermally exchanging with the second outlet duct 9-10, 8-10, and the at least one second inlet duct 14 or transport duct coming from the top of the flash tank 28 may both merge into a common duct 15 before entering the regeneration column 25 or thermally exchanging with the second inlet duct 39.

Essentially, the heat contained in the hot gases exiting the regeneration column 25 is utilized in the heat exchanger or boiler 33 or 34, transferring heat to a water stream 20 or 21, thereby generating steam evacuated through a duct 11 or 12 and, if desired, this steam can be combined with the steam generated from a flash tank 28, the latter being extracted via a duct 14. Alternatively, this heat is used to heat the regenerated absorbent solution, optionally before the flash tank.

In all these cases, the at least one compressor 30 is placed along the common duct 15 to intercept and compress the fluid transported within it.

With a plant according to the present invention, it is possible to implement a process in which a gas mixture is fed to the bottom of the absorption column 24 through the first supply duct 1 and at least one absorbing solution is introduced so that it enters the top of the absorption column 24 through the first inlet duct 5, in such a way that following the reaction, preferably countercurrent, between the gas mixture and the absorbing solution in the absorption column 24, the gas mixture, stripped in whole or in part of at least one gas, such as CO₂, by the at least one absorbing solution, is obtained in the first outlet duct 2, while the at least one absorbing solution with the at least one gas absorbed within it is obtained in the first collecting duct 6.

This process would then involve feeding the at least one absorbing solution with at least one gas absorbed within it into at least one regeneration column 25 through the at least one second supply duct or line 7 in fluid communication with the first collecting duct 6, and introducing a regeneration fluid for the at least one absorbing solution through the at least one second inlet duct or line 13, 15, 39 at the bottom of the regeneration column 25, so that a gaseous compound containing the at least one gas desorbed from the top of the regeneration column 25 is obtained in the second outlet duct or line 8-9-10, and at least one regenerated absorbing solution, i.e. devoid in whole or in part of at least one gas absorbed within it, is obtained in the second collecting duct 3, in such a way that the at least one regenerated absorbing solution is re-sent or preferably can be re-sent (optionally through proper integration or passage through a possible tank or buffer) to the first inlet duct or line 5.

Furthermore, such a process also includes a heat exchange phase in at least one heat exchanger 33, 34, 26, 27 between
the gaseous compound exiting via at least one second outlet duct 8-9-10 from the regeneration column 25 and the regeneration fluid, or a heating fluid for the same, in order to heat the regeneration fluid before its introduction through at least one second inlet duct 13, 15, 39 into the regeneration column 25; and/or
the regenerated absorbent solution exiting via at least one second collecting duct 3 from the regeneration column 25 and the absorbent solution containing the at least one gas absorbed along at least one second supply duct 7, in order to heat the absorbent solution containing the at least one gas absorbed along the at least one second supply duct 7; and/or
the gaseous compound exiting via at least one second outlet duct 8 from the regeneration column 25, to transfer heat to the absorbent solution itself, particularly the regenerated absorbent solution, optionally after the latter has been cooled by heat exchange with the at least one absorbent solution containing the at least one gas absorbed along the second supply duct 7.

The process then includes a compression phase using the at least one compressor 30, 31, 32 to compress and subsequently heat the regeneration fluid or a fluid heating it, preferably downstream of the respective heat exchanger 33-34, 27, i.e., the heat exchanger located on the same line or duct as the compressor.

Clearly, depending on the plant's characteristics, the process may include specific phases.

For example, during the heat exchange phase, at least one second inlet duct may be placed in thermal exchange with the second outlet duct 8-9-10, while the compression phase could involve compressing, via compressor 31 or 30, the fluid transported along the second inlet duct downstream of the at least one heat exchanger 34.

In addition or alternatively, the heat exchange phase could comprise a first phase of heat exchange in the at least one first heat exchanger 33 between the heating fluid transport duct 20-11 and the second outlet duct 8-9, 8-10 for heating the transport fluid, as well as a second phase of heat exchange in the second heat exchanger 26 between the transport duct 16-17-18-19 and the second inlet duct 39 for heating the regeneration fluid, while the compression phase could be carried out by compressing, with the compressor 32, the fluid in the transport duct 11-16, downstream of the at least one first heat exchanger 33 and, optionally, upstream of the second heat exchanger 26.

In addition or alternatively, the heat exchange phase could comprise a first phase of heat exchange between the first 20-11-15 of the second inlet ducts in heat exchange and the second outlet duct 8-10, as well as a second phase of heat exchange between the transport duct 16-17-18-19 of the heating fluid and the second 39 of the inlet ducts for heating the regeneration fluid, while the compression phase could be carried out by compressing, with the compressor 30, the fluid in the first 11-15 of the second inlet ducts downstream of the at least one first heat exchanger 33 and upstream of the branching section or outlet of the transport duct 16-17-18-19.

In addition or alternatively, in the heat exchange phase, the second collecting duct 3 of the at least one regenerated absorbing solution could be placed in heat exchange with the second supply duct 7 of the at least one absorbing solution, while in the flash tank 28, the separation of the fluid conveyed by the second duct 3-4 would occur, with a lighter phase exiting from the top of the tank 28 to feed the at least one second inlet duct 14 or the heating fluid transport duct for the regeneration fluid, and a heavier phase exiting from the bottom of the flash tank 28 to feed the first inlet duct 5.

If desired, at least one second inlet duct 21-12 or transport duct 20-11, in thermal exchange with the second outlet duct 9-10, 8-10, and at least one second inlet duct 14 or transport duct of the heating fluid coming from the top of the flash tank 28, both converge into a single common duct 15 before the latter is fed into the regeneration column. In this case, the at least one compressor 30 is located at the interception of the common duct 15 to compress and heat the fluid within it.

The non-limiting embodiments of the present invention represented in figures 1 to 8 will now be described in detail. Each of these integrates one or more of the features above described, as well as optional characteristics of a plant according to the present invention.

Thus, for example, referring first to the plant of the non-limiting embodiment illustrated in figure 1, it includes an absorption column 24 for at least one gas, a first supply duct 1 of a gas mixture at the bottom of the absorption column 24, as well as a first inlet duct 5 for at least one absorbent solution at the top of the absorption column.

In the PL1 plant, a first outlet duct 2 of the gas mixture, partially or completely deprived of at least one gas by the at least one absorbing solution, is provided from the top of the first absorption column, as well as a first collecting duct 6 from the bottom of the absorption column 24 of the at least one absorbing solution with at least one gas absorbed within it.

The PL1 plant is also equipped with at least one regeneration column 25 for at least one absorbent solution, which is served by respective ducts or lines, specifically a second supply duct 7, as well as two or three second inlet ducts 13, 15, 39, a second outlet duct 8, and a second extraction duct 3.

Furthermore, the PL1 plant is equipped with multiple heat exchangers 33, 34, 26, 27, if desired two 33, 34 for extracting heat from the gas mixture exiting through the second outlet duct 8 from the regeneration column 25, and if desired one 27 for extracting heat from the regenerated absorbing solution exiting through the second collecting duct 3 from the regeneration column 25 to transfer it, directly or indirectly (via the heating fluid), to the regeneration fluid, thereby heating the latter before its injection via at least one second inlet duct 13, 15, 39 into the regeneration column 25.

Three compressors 30, 31, 32 are also provided, each dedicated to compressing and thereby heating the regeneration fluid or a heating fluid thereof, downstream of a respective heat exchanger 27, 34, 33.

Advantageously, one heat exchanger 34 is designed to place a second inlet duct or line 21-12-13 in thermal exchange with the second outlet duct or line 8-9-10, while the at least one compressor 31 is located at the interception of the second inlet duct 21-12-13 downstream of the at least one heat exchanger 34.

To explain the sequence of numbers "21-12-13," the respective second inlet duct or line, as described at the beginning of the embodiments section of the invention, comprises three sections or segments, a first segment 21 upstream of the heat exchanger 34, a second segment downstream of the heat exchanger 34 and upstream of the compressor 31, and a third segment downstream of the compressor 31, which leads into the regeneration column 25.

With reference instead to the sequence "8-9-10", the second duct or outlet line includes a series (three in the example in the figures) of sections or pieces, in particular at least two pieces or sections 9, 10, one from an opposite side to the other with respect to the heat exchanger 34, although if another heat exchanger 33 is also provided, there would then be three sections or pieces: one 8 upstream of the heat exchanger 33, one 9 between the two heat exchangers 33, 34, and one 10 downstream of the heat exchanger 34.

According to the embodiment in figure 1, the PL1 plant is also equipped with a transport duct 20-11-16-17-18-19 of fluid for heating the regeneration fluid, and in addition to the main or top heat exchanger 34, a first heat exchanger 33 is provided to exchange heat between a branch or two sections or pieces 20-11 of a transport duct for the heating fluid with the second outlet duct or line 8-9, to heat the transport fluid. Additionally, a second heat exchanger 26 is provided to place in exchange heat other sections or pieces of the transport duct 16-17-18-19 and the second inlet duct 39 for heating the regeneration fluid.

With reference to the sequence of numbers "20-11-16-17-18-19," the transport duct, as indicated earlier at the beginning of the chapter on embodiments the invention, comprises a series of sections or pieces. More specifically, a first section 20 is upstream of the heat exchanger 33, a second section is downstream of the heat exchanger 33 and upstream of the compressor 32, a third section is downstream of the compressor 32 and opens, directly or with the interposition of an additional section 17, into a second heat exchanger or boiler 26 in thermal exchange with a second inlet duct 39. An outlet section 18 of the transport duct from the second heat exchanger 26 can then be provided, possibly with an appropriate branch 19.

In this case, the at least one compressor 32 is positioned at the interception of two sections or segments 11, 16 of the transport duct 20-11-16-17-18-19 downstream of the at least one first heat exchanger 33 and upstream of the second heat exchanger 26.

Specifically, with reference to the second inlet duct 39 in thermal exchange with the transport duct, it may, for example, include a section 37 upstream of the second heat exchanger 26 coming from the bottom of the regeneration column 25, and one or more sections 38-39 downstream of the second heat exchanger 26, leading, for example, to a level of the regeneration column 25 lower than that of the section 37 upstream.

Preferably, the second outlet duct or line 8-9-10 passes first through the first heat exchanger 33 and then through the main or head heat exchanger 34.

In addition to what has just been indicated, according to the non-limiting embodiment shown in figure 1, a bottom heat exchanger 27, preferably liquid-liquid, is also provided, designed to place in heat exchange the second collecting duct or line 3-4 of the at least one regenerated absorbent solution and the second supply duct or line 7 of the at least one absorbent solution.

In this case, the PL1 plant may also include a flash tank 28 intercepting the second collecting duct or line 3-4, in particular downstream of the heat exchanger 27, from the top of which tank 28 a second inlet duct 14-15 branches off, while from the bottom of the flash tank 28, the first inlet duct 5 branches off, possibly intercepted and assisted by a dedicated pump 35 as well as by an optional heat exchanger 29 before flowing into the absorption column 24.

According to this variant, the second inlet duct 14-15 is intercepted by a dedicated compressor 30, designed to compress, heat, and direct the fluid inside it.

Clearly, the PL1 plant also includes appropriate valves, whether motorized, manual, or automatic.

Furthermore, the PL1 plant is equipped with a dedicated control unit, not illustrated in the figures, for controlling components such as compressors, pumps, valves, etc., as well as potential sensors for monitoring the state of components or fluids in various elements of the plant and controlling, if necessary, pumps, compressors, valves, or other adjustable components of the plant.

The operation of the specific plant shown in figure 1 is as follows. The gas mixture containing the gas, such as CO₂ to be selectively removed, is fed through duct 1 into the absorption column 24, where the gas is contacted, preferably countercurrently, with an absorbent solution fed to the top of the column from duct 5, and where the selective removal of the gas occurs.

The gas mixture, now freed from the gas to be removed, exits the column 24 through duct 2, while the solution that has absorbed the gas to be removed from the gas mixture in column 24 exits from the bottom through duct 6 and it is conveyed or pushed by pump 36 and sent to the solution/solution heat exchanger 27, where it is heated in thermal exchange with the regenerated solution conveyed in the second duct or line of collecting 3, and then it is sent to the top of the regeneration column 25 through duct 7.

In the column 25, the absorbed gas, for example CO₂, is released chemically from the solution, for example, through stripping with steam generated in the column 25 via heat supplied by the reboiler 26 and/or steam supplied directly to the column 25 through ducts 13 and 15. The released gas exits from the top of the column 25 through duct 8.

The regenerated aqueous solution, after expelling the absorbed gas, is extracted from the bottom of the column 25 through duct or line 3 and, after passing through the solution/solution heat exchanger 27, where it cools in thermal exchange with the first extraction duct 6, it is directed to the flash tank 28 through duct 4.

In the flash tank 28, the regenerated solution releases steam due to pressure reduction. This steam is extracted through duct 14 by compressor 30 and directed through duct 15 to the bottom of column 25.

The regenerated solution exiting from the bottom of the flash tank 28 feeds pump 35 and, after further cooling in heat exchanger 29, supplies the top of the absorption column 24 through duct 5.

The gases exiting from duct or line 8 are relatively warm, and the heat contained in them can be used to generate steam by boiling water fed into boilers 33 and/or 34 via ducts 20 and 21.

In particular, the steam generated in boiler 33 is at higher pressure and temperature compared to that generated in boiler 34.

The compressor 32, if provided, further raises the pressure and temperature to a level sufficient to supply the reboiler 26.

The steam generated in boiler 34, through passage in compressor 31, further raises the pressure and temperature to a level sufficient to supply column 25.

According to this variant, compressors 30, 31, and 32 essentially act as a heat pump to directly (30, 31) and/or indirectly (32) transfer the heat extracted from the process, converted into steam, to supply the regeneration process in column 25.

These heat pumps are capable of extracting all the necessary heat for the process via endogenous means, in the absence of an external heat source.

However, an external heat source can also be provided, in which case additional steam can be generated and integrated into the process, for example by feeding steam to the reboiler 26 from the outside through duct 17, and extracting condensate through duct 18.

The condensate 19 can then be reused to supply, after cooling, the ducts 20 and 21 that feed water to boilers 33 and 34, respectively.

Referring now to the non-limiting embodiment illustrated in figure 2, it shows a design variant compared to the example in figure 1, which is particularly applicable when the operating pressures of the flash tank 28 and boiler 34 are either the same or very close. In this case, it is advantageous to use a single compressor 30 to compress both vapor streams 12 and 14, thus supplying the regeneration column through duct 15. This would provide the obvious benefit of eliminating one compressor (compressor 31 in figure 1).

In relation to this aspect, at least one second inlet duct 21-12, in thermal exchange with the second outlet duct 9-10, and the at least one second inlet duct 14 coming from the top of the flash tank 28, can both merge into a common duct 15 before entering the regeneration column 25. In this case, the at least one compressor 30 is positioned to intercept the common duct and compress the fluid being transported within it.

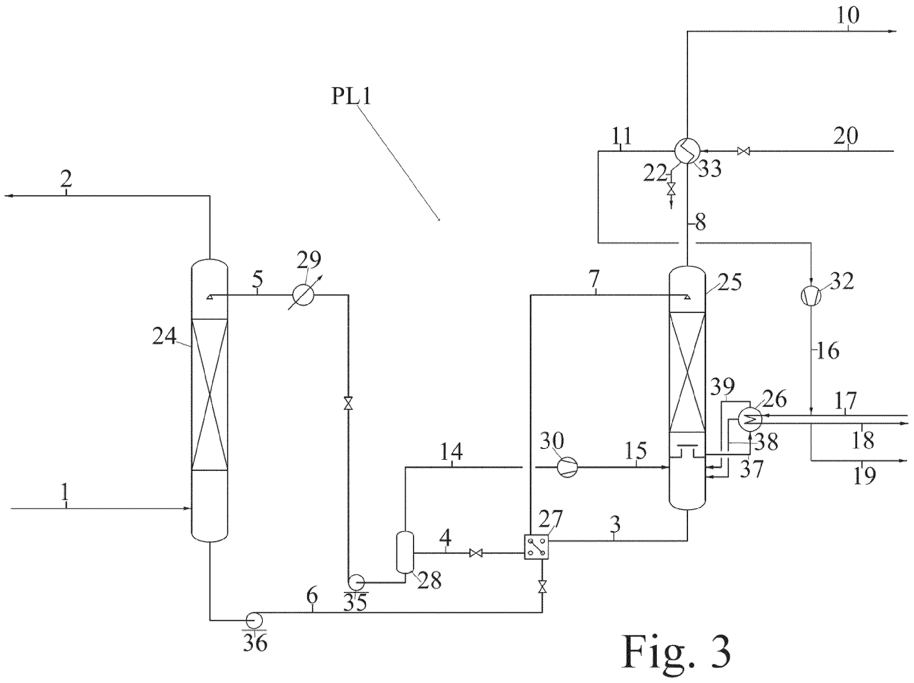

Figure 3 illustrates another non-limiting design variant, in which, for simplicity, only one boiler 33 is used to generate steam by exploiting the heat contained in the hot gases exiting the regeneration column 25 through duct 8. The steam generated in boiler 33 is sent through duct 11 to compressor 32, which then feeds the reboiler 26 via duct 16.

Referring now to figure 4, it shows a design variant in which a single compressor 30 is used to recompress both the steam generated in the flash tank 28 (transported by duct 14) and the steam generated in the single boiler 33 from the hot gases (transported by duct 11). Moreover, the compressed steam is then used to supply the solution regeneration process in column 25, both directly through duct 15 and indirectly via duct 16 and reboiler 26. This plant scheme represents a significant simplification of the layout, especially considering that only one compressor is used.

In essence, according to the example in figure 4, at least two second inlet ducts 20-11-15, 39 are provided, as well as a transport duct 16-17-18-19 for heating the regeneration fluid, which forms a branch of the first of the second inlet ducts 15, with the latter directly feeding into the regeneration column 25.

In this case, the at least one heat exchanger includes at least one first heat exchanger 33 designed to place the first 20-11-15 of the second inlet ducts in thermal exchange with the second outlet duct 8-10, and also includes at least one second heat exchanger 26 designed to place in thermal exchange the transport duct 16-17-18-19 for the heating fluid with the second 39 of the inlet ducts for heating the regeneration fluid.

According to this variant, the at least one compressor 30 is positioned intercepting the first 11-15 of the second inlet ducts downstream of the at least one first heat exchanger 33 and upstream of the branching or outflow section of the transport duct 16-17-18-19 from this inlet duct 11-15.

The second inlet duct 39 may also have a section 37 upstream of the second heat exchanger 26 coming from the bottom of the regeneration column 25, and a section 38-39 downstream of the second heat exchanger 26, leading to a lower level of the regeneration column 25 than the origin of the upstream segment 37.

To further clarify the operation of the plant in the configurations depicted in figures 1 to 4, a possible thermal profile of the solution and the gas exiting the regenerator in the previously described plant is provided: for example, the regenerated solution entering at 70°C through duct 5 into the absorber 24, and exiting from it through duct 6 at 81°C, is heated in exchanger 27 to 108 °C and enters the regenerator 25 through duct 7. The absorbing solution leaving the regenerator 25 through duct 3 at 112°C is cooled in exchanger 27 to 85°C and, through duct 4, feeds the flash tank 28 where further cooling occurs to 74°C. After extraction from the bottom of the flash tank 28 and pumping through pump 35, the solution is further cooled in exchanger 29 to 70°C and re-enters the absorber 24 through duct 5. The desorbed gas exiting the regenerator 25 through duct 8 is at 102°C and is cooled to a final temperature of 76°C in one or two stages, depending on the presence of the exchanger 34. If exchangers 33 and 34 are present, the intermediate gas temperature is, for example, 91°C.

Regarding the non-limiting embodiments of the present invention represented in figures 5 to 8, they correspond, respectively, to the examples 1 to 4 in which the boiler or heat exchanger 33 is intended to thermally exchange the gas mixture exiting through the at least one second outlet duct or line 8 from the regenerator column 25 and a transport duct or line 20 of the absorbing solution itself, taken from a section or segment 40 of the second inlet duct or line 3, 4, preferably downstream of the optional heat exchanger 27. The transport duct or line 20 would preferably open through one or more respective sections or segments 41, again into the second inlet duct or line 3, 4, but preferably downstream of the respective entry or extraction point 40.

In this case, as previously mentioned, the function of the heat exchanger 33 would not be to generate steam from a water stream, but to heat the absorbent solution, which would then be potentially diverted, via a branch represented by a specific segment or section of duct 41, back to the extraction point from which it had branched. In this case, the goal would be to further heat the solution that, from the second extraction duct or line 3, 4, feeds the flash tank 28, thereby generating more flash steam to be compressed as described earlier 14-30-15.

Moreover, in this case, if the reboiler 26 is provided, it would preferably not be supplied with heating fluid obtained following thermal exchange in the heat exchanger 33, but would instead advantageously be an external source of heat and steam would be supplied to the reboiler 26 from the outside through duct 17, with condensate being extracted through duct 18.

To further clarify the operation of the plant in the configurations shown in figures 5 to 8, a possible thermal profile of the solution and the gas exiting the regenerator is provided: for example, the regenerated solution entering at 70°C through duct 5 into absorber 24, and exiting through duct 6 at 81°C, is heated in heat exchanger 27 to 108°C and enters the regenerator 25 via duct 7. The absorbent solution leaving the regenerator 25 through duct 3 at 112°C is then cooled in heat exchanger 27 to 85°C. From here, through path 40, 20, 41, 21, the solution is heated to 95°C and, via duct 4, feeds the flash tank 28 where further cooling occurs to 74°C. After extraction from the bottom of the flash tank 28 and pumping through pump 35, the solution is further cooled in heat exchanger 29 to 70°C and returns to the absorber 24 through duct 5. The desorbed gas exiting the regenerator 25 through duct 8 is at 102°C and cools down to the final temperature of 76°C, in one or two steps, depending on the presence of heat exchanger 34. If exchangers 33 and 34 are present, the intermediate gas temperature is, for example, 91°C.

It will be understood that a plant and process according to the present invention allows the thermal regeneration of the absorbent solution of a gas, such as CO₂, even in situations where there is limited or even no availability of external heat.

Furthermore, it will be understood that the plant and process according to the present invention are much more efficient than an external heat pump that transfers the excess heat generated by the system to a reboiler.

A practical example of using a plant according to the present invention is provided below.

A gas flow with a Dry Flow = 315,000 Nm³/h, atmospheric pressure, and a CO₂ content of 16.7% on a dry basis feeds a CO₂ capture or absorption section.

In conventional scheme of capture, 91.6 MW of thermal energy and 18 MW of electrical power would be required to capture or absorb 90% of the CO₂ in the gas.

However, thermal waste heat near the plant can only recover 31.5 MW. The remaining thermal flow, 60.1 MW, can be supplied via the present invention, for example, according to figure 4:
- 17 t/h of steam are produced in the flash tank 28, and
- 64 t/h of steam are produced in the boiler 33.

The 81 t/h of steam generated feed the compressor 30, which consumes 6.4 MW to compress the steam to the desired level. Thus, a ratio of thermal energy transferred to mechanical work done is 60.1/6.4 = 9.4.

An external heat pump transferring heat between the same thermal levels as in the example would have an ideal COP of 7.1 and an actual COP estimated to be between 3.3 and 3.7.

It follows that the steam generation and consumption circuit of the present invention is significantly more efficient in terms of consumption than an external heat pump.

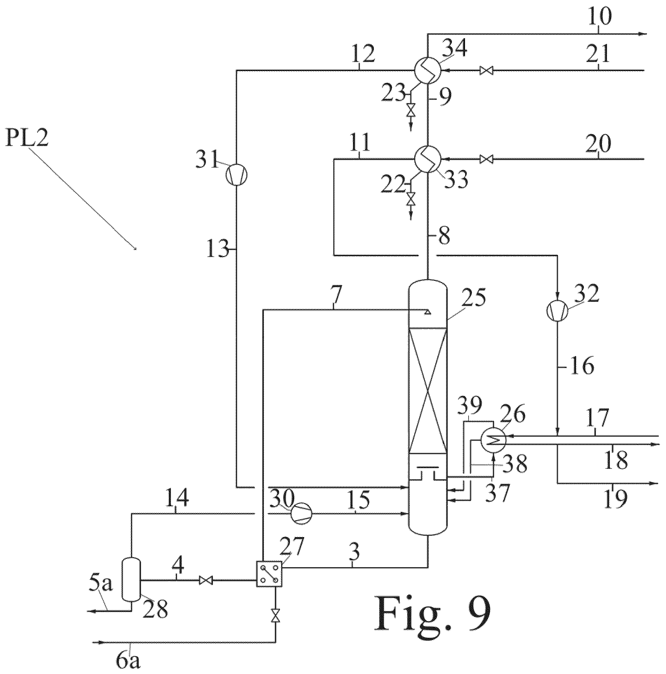

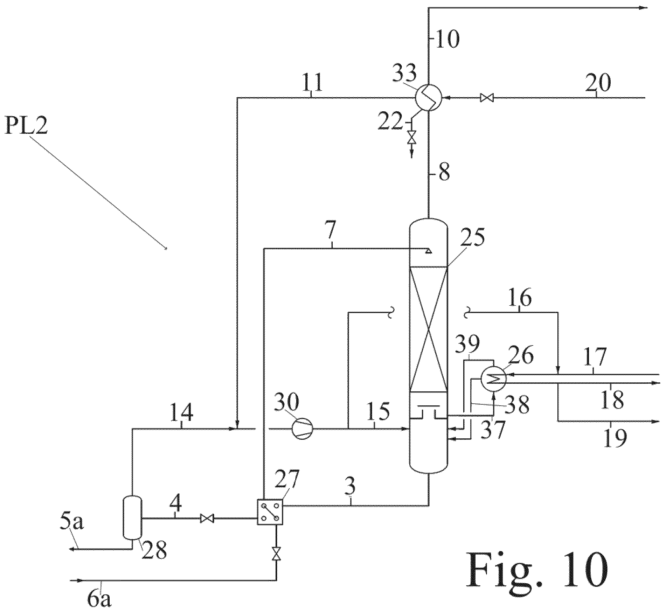

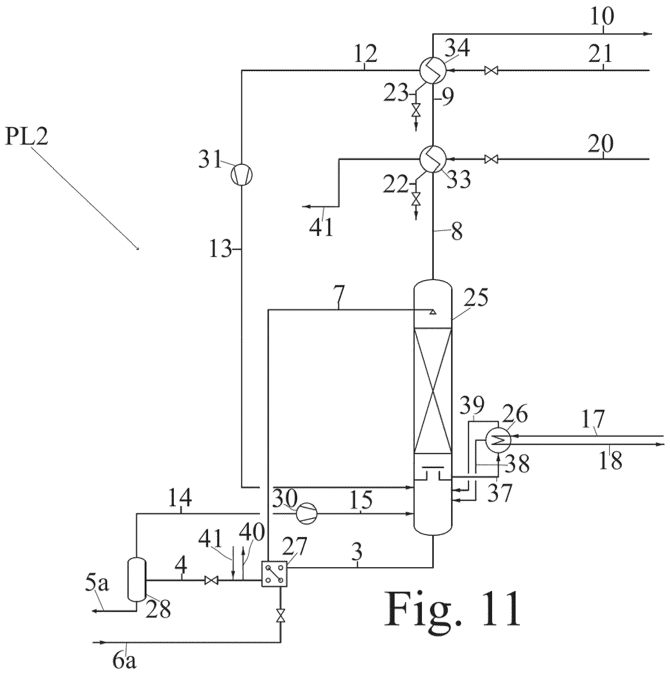

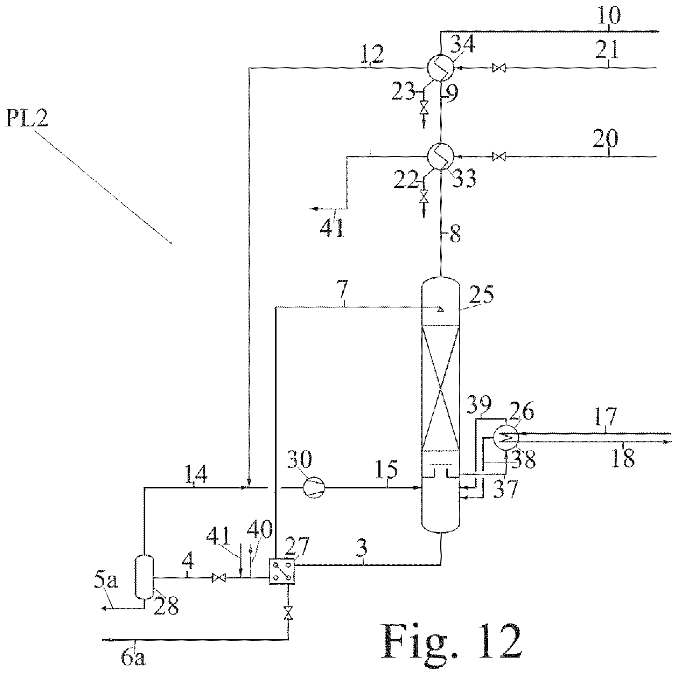

Now, referring to figures 9 to 12, they illustrate respective PL2 plants according to the present invention for the regeneration of at least one absorbent solution to deprive it in whole or in part of at least one gas, such as CO₂, previously absorbed within it.

In particular, the PL2 plants in figures 9 to 12 correspond, respectively, to the regeneration station or unit or part of the PL plants in figures 1, 4, 5, and 6, but naturally, a PL2 plant according to the present invention could also correspond to the regeneration station or unit or part of the PL plants in figures 2, 3, 7, and 8.

Therefore, the subject-matter of the present invention is not only a PL1 plant (figures 1 to 8) for the absorption of at least one gas, such as CO₂, from gas mixtures, including an absorption column 24, a regeneration column 25, and the respective feeding, intake, output, and extraction ducts, heat exchanger/s, compressor/s, flash tank, etc., but also a PL2 plant (figures 9 to 12) designed exclusively for the regeneration of at least one absorbent solution to remove from it all or part of at least one gas, such as CO₂, previously absorbed within it, with the regeneration column 25 and the respective feeding, intake, output, and extraction ducts, heat exchanger/s, compressor/s, and possible flash tank, etc., which, however, does not include an absorption column 24 and its respective ducts.

As it will be understood, the PL2 plant would be supplied with at least one absorbing solution containing at least one gas absorbed within it, which absorbing solution is derived from a source that is, in turn, supplied or fed, through appropriate transport and possibly storage, from another plant provided with an absorption column 24. In this case, the absorption station or unit or part and the regeneration station or unit or part are not part of the same plant, but rather of two distinct plants.

A PL2 plant would therefore, among other things, have at least one collecting duct 3 from the bottom of the regeneration column 25 of the at least one regenerated absorbent solution, i.e. it is completely or partially free of at least one gas absorbed within it due to the action of the regeneration fluid. It may also optionally have a discharge duct 5a for at least one regenerated absorbent solution, in fluid communication (optionally with the interposition of the heat exchanger 27 and the flash tank 28) with the second collecting duct 3 to deliver the at least one regenerated absorbent solution to the discharge duct 5a.

Clearly, the at least one collecting duct 3 or, if provided, the discharge duct 5a, instead of being or being in fluid communication with the first feed duct 5 of at least one absorbent solution into the top of the at least one absorption column 24, opens into a storage tank or container (optionally mounted on a truck), for subsequent transfer via an appropriate transport means or pipeline to an absorption column 24 of another plant, for reuse of the regenerated absorbent solution.

A PL2 plant would also have at least one supply duct 7 for at least one absorbing solution containing the at least one absorbed gas at the top of at least one regeneration column 25, and possibly also an inlet pipe 6a, in fluid communication with the supply duct 7. This inlet pipe 6a would not correspond to the first extraction pipe 6 from the bottom of an absorption column 24 of at least one absorbing solution with the at least one absorbed gas inside it, but would instead derive from a tank or container (possibly mounted on a truck) in which it was previously loaded from the absorption column 24 of another plant.

Naturally, in the case of the PL2 plant, the term "second" associated with the supply 7, inlet 13, 15, 39, output 8, and collecting 3 duct can be omitted, as there is no "first" feed duct 1, intake duct 5, output duct 2, or collecting duct 6.

The same logic applies to the process, as a process according to the present invention could also be conducted with a PL2 plant solely for the regeneration of at least one absorbent solution to remove from it all or part of at least one gas, such as CO₂. In this case, the previous absorption phases could be carried out in an absorption plant according to the state of the art, from which the absorbent solution with at least one absorbed gas would be taken and then, after transport and possibly storage, serve as one of the feed sources for the regeneration process according to the present invention, where it would later be returned after transport and possible storage as the regenerated absorbent solution.

All the characteristics and variations described for the PL1 plant regarding the regeneration station or part or unit, i.e., the part upstream of the first feed duct 5 and downstream of the first collecting duct 6, thus those provided with the regeneration column 25 and the corresponding duct/s, heat exchanger/s 26, 27, 33, 34, compressor/s 30, 31, 32, and possibly the flash tank 28, along with appropriate valves and sensors, also apply to the PL2 plant, and it is not considered necessary to repeat them.

Thanks to the present invention, it is possible to eliminate all the devices according to the prior art and perform selective removal of gases, such as CO₂, from gas mixtures containing them with a plant and process that optimally utilize the residual heat discarded by the process itself, and, through a heat pump consisting of a steam thermocompression circuit, drastically reduce or even eliminate the need for external heat supply for the regeneration of the solutions used for CO₂ absorption from the gas mixtures.

Modifications and variations of the invention are possible within the scope defined by the claims.

## Claims

1. Plant or plant station for the regeneration of at least one absorbent solution in order to deprive it in whole or in part of at least one gas, such as for example CO₂, previously absorbed inside it, comprising:
- at least one regeneration column (25) of said at least one absorbent solution,
- at least one duct for supplying (7) said at least one absorbent solution with said at least one gas absorbed inside it at the top of said at least one regeneration column (25),
- at least one inlet duct (15, 39) of a regeneration fluid of said at least one absorbent solution on the bottom of said regeneration column (25),
- at least one outlet duct (8) of a gaseous compound comprising said at least one gas desorbed from the top of said regeneration column (25),
- at least one collecting duct (3) from the bottom of said regeneration column (25) of said at least one regenerated absorbent solution, i.e. completely or partially devoid of said at least one gas absorbed inside it by the action of the regeneration fluid,
said plant or plant station further comprising:
- at least one heat exchanger (33, 34) designed to obtain heat
from said gaseous compound exiting through said at least one outlet duct (8) from said regeneration column (25) to transfer it to the regeneration fluid or to a heating fluid thereof and then heat said regeneration fluid before its introduction by said at least one inlet duct (13, 15, 39) in said regeneration column (25),
said plant or plant station further comprising at least one compressor (30, 31, 32) designed to compress and then heat said regeneration fluid or said heating fluid thereof,
wherein said at least one heat exchanger (34) is designed to place said at least one inlet duct (21-12-13, 21-12-15) in heat exchange with said at least one outlet duct (9-10),
wherein said at least one compressor (30, 31) intercepts said at least one inlet duct (12-13, 12-15, 11-15) downstream of said at least one heat exchanger (34),
wherein at least two inlet ducts (20-11-15, 39) and a transport duct (16-17-18-19) of fluid for heating the regeneration fluid which constitutes a branch of a first (20-11-15) of said inlet ducts are provided,
wherein said at least one heat exchanger includes at least one first exchanger (33) designed to place a first (20-11-15) of said inlet ducts in heat exchange with said outlet duct (8-10),
wherein said at least one heat exchanger includes at least one second heat exchanger (26) designed to place said transport duct (16-17-18-19) of the heating fluid in heat exchange with a second (39) of the inlet ducts for heating the regeneration fluid, and
wherein said at least one compressor (30) intercepts said first (11-15) of said second inlet ducts downstream of said at least one first heat exchanger (33) and upstream of the branch or outlet section of said transport duct (16-17-18-19).

2. Plant or plant station according to claim 1, comprising a transport duct (20-11-16-17-18-19) of heating fluid of the regeneration fluid,
wherein said at least one heat exchanger includes at least one first exchanger (33) designed to place said transport duct (20-11) of the heating fluid in heat exchange with said outlet duct (8-9, 8-10) for heating said heating fluid as well as a second heat exchanger (26) designed to place in heat exchange said at least one transport duct (16-17-18-19) and said inlet duct (39) for heating said regeneration fluid, and
wherein said at least one compressor (32) intercepts said transport duct (11-16) downstream of said at least one first heat exchanger (33).

3. Plant or plant station for the regeneration of at least one absorbent solution in order to deprive it in whole or in part of at least one gas, such as for example CO₂, previously absorbed inside it, comprising:
- at least one regeneration column (25) of said at least one absorbent solution,
- at least one duct for supplying (7) said at least one absorbent solution with said at least one gas absorbed inside it at the top of said at least one regeneration column (25),
- at least one inlet duct (13, 15, 39) of a regeneration fluid of said at least one absorbent solution on the bottom of said regeneration column (25),
- at least one outlet duct (8) of a gaseous compound comprising said at least one gas desorbed from the top of said regeneration column (25),
- at least one collecting duct (3) from the bottom of said regeneration column (25) of said at least one regenerated absorbent solution, i.e. completely or partially devoid of said at least one gas absorbed inside it by the action of the regeneration fluid,
said plant or plant station further comprising at least one heat exchanger (33, 27) designed to obtain heat from the gaseous compound exiting through said at least one outlet duct or line (8) from the regeneration column (25) to transfer it to the regenerated absorbent solution,
said plant or plant station further comprising at least one compressor (30, 31, 32) designed to compress and then heat said regeneration fluid,
wherein said at least one heat exchanger (27) is designed to place said collecting duct (3) of said at least one regenerated absorbent solution in heat exchange with said supply duct (7) of said at least one absorbent solution,
said plant or plant station further including a flash tank (28) intercepting said collecting duct (3-4) from the top of which tank departs said at least one duct for introducing (14),
said plant o plant station further comprising at least one transport duct (40, 20, 41) which has an inlet or branch starting from said collecting duct (3-4) upstream of said flash tank (28) and downstream of the heat exchanger (27) designed to place in heat exchange said collecting duct (3) of said at least one regenerated absorbent solution with said supply duct (7) of said at least one absorbent solution,
said at least one transport duct (40, 20, 41) opening by one or more segments or sections (41) always in the second collecting duct or line (3, 4), but downstream of the respective inlet or branch (40), and
said transport duct (40, 20, 41) being placed in heat exchange through a respective heat exchanger (33) with the gas compound exiting through the at least one second outlet duct or line (8) from the regenerating column (25).

4. Plant or plant station according to claim 3, wherein said at least one heat exchanger (34) is designed to place said at least one inlet duct (21-12-13, 21-12-15) in heat exchange with said at least one outlet duct (9-10), and
wherein said at least one compressor (30, 31) intercepts said at least one inlet duct (12-13, 12-15, 11-15) downstream of said at least one heat exchanger (34).

5. Plant or plant station according to claim 4, wherein said at least one inlet duct (21-12) or transport duct of the heating fluid (20-11) of the regeneration fluid in heat exchange with said outlet duct (9-10, 8-10) and said at least one inlet duct (14) coming from the top of said flash tank (28) both convey into the same common duct (15) before being introduced into said regeneration column (25) or being placed in heat exchange with the second of the inlet ducts (39), and
wherein said at least one compressor (30) intercepts said common duct (15).

6. Plant or plant station according to any one of the previous claims, wherein said absorbent solution is selected from the group consisting of aqueous solutions of primary, secondary, tertiary ethanolamines or mixtures thereof, complex ethanolamines, including the family of "sterically hindered" amines or solutions of simple or activated alkali metal carbonates with the addition of glycine or other amino acids, primary, secondary, tertiary ethanolamines or mixtures thereof, complex ethanolamines, including the family of "sterically hindered" amines, inorganic promoters such as arsenic oxides, borates.

7. Plant for the absorption of at least one gas, such as CO₂, from gaseous mixtures, comprising:
- at least one absorption column (24) of said at least one gas,
- a first supplying duct (1) of a gaseous mixture at the bottom of said at least one absorption column (24),
- a first inlet duct (5) of at least one absorbent solution at the top of said at least one absorption column (24),
- a first outlet duct (2) of said gaseous mixture, completely or partially deprived of said at least one gas by said at least one absorbent solution, from the top of said first absorption column (24),
- a first collection duct (6) from the bottom of said absorption column (24) of said at least one absorbent solution with said at least one gas absorbed inside it, said plant comprising a plant station according to any one of the previous claims,
wherein said supply duct (7) of said at least one absorbent solution with said at least one gas absorbed inside it at the top of said at least one regeneration column (25) is in fluid communication with said first collecting duct (6), and
wherein said collecting duct (3) from the bottom of said regeneration column (25) of said at least one regenerated absorbent solution is in fluid communication with said first inlet duct (5) for the delivery to the latter of said at least one regenerated absorbent solution.

8. Plant according to claim 7 comprising a plant station according to claim 3, wherein said first inlet duct (5) extends from the bottom of said flash tank (28).

9. Method for the regeneration of at least one absorbent solution in order to deprive it in whole or in part of at least one gas, such as for example CO₂ by means of a plant or plant station according to any one of the previous claims, which includes the following steps:
supplying said at least one absorbent solution with said at least one gas absorbed into it to said at least one regeneration column (25) by means of said at least one supply duct (7) of said at least one absorbent solution with said at least one gas absorbed inside it and introduce a regeneration fluid of said at least one absorbent solution through said at least one inlet duct (13, 15, 39) at the bottom of said regeneration column (25), so that a gaseous component is obtained in said outlet duct (8-9-10) comprising said at least one gas desorbed from the top of said regeneration column (25) and in said collecting duct (3) at least one regenerated absorbent solution, i.e. devoid in whole or in part of said at least one gas absorbed inside it,
said method further including:
- a heat exchange step in said at least one heat exchanger (33, 34, 26, 27) between
said gaseous compound exiting through said at least one outlet duct (8) from said regeneration column (25) and the regeneration fluid or a fluid heating thereof, with the aim of heating said regeneration fluid before its introduction by said at least one inlet duct (13, 15, 39) in said regeneration column (25), and/or
said regenerated absorbent solution exiting through said at least one collecting duct (3) from said regeneration column (25) and said at least one absorbent solution with said at least one gas absorbed in said at least one supply duct (7), for heating said at least one absorbent solution with said at least one gas absorbed along said at least one supply duct (7), and/or said gaseous compound exiting through said at least one outlet duct or line (8) from the regeneration column (25) to transfer it to the regenerated absorbent solution,
- a compression step by means of said at least one compressor (30, 31, 32) so as to compress and then heat said regeneration fluid or said heating fluid thereof.

10. Method according to claim 9, wherein during said heat exchange step, said at least one inlet duct of a regeneration fluid is placed in heat exchange into said at least one heat exchanger (34) with said outlet duct (8-9- 10) of a gaseous compound for heating said regeneration fluid, while said compression step is carried out by compressing the fluid transported along said inlet duct for a regeneration fluid downstream of said at least one heat exchanger (34).

11. Method according to claim 9 or 10 by means of a plant or plant station according to claim 2,
wherein said heat exchange step comprises a first heat exchange step in said at least one first exchanger (33) between said transport duct (20-11) of the heating fluid and said outlet duct (8-9, 8-10 ) of a gaseous compound for heating said heating fluid as well as a second heat exchange step in said second heat exchanger (26) between said transport duct (16-17-18-19) and said inlet duct (39) of a regeneration fluid for heating said regeneration fluid,
wherein said compression step is carried out by compressing the fluid in said transport duct (11-16) downstream of said at least one first heat exchanger (33).

12. Method according to claim 10 by means of a plant or plant station according to claim 1,
wherein said heat exchange step comprises a first heat exchange step between said first (20-11-15) of said inlet ducts and said outlet duct (8-10) of a gaseous compound, as well as a second heat exchange step between said transport duct (16-17-18-19) of the heating fluid and the second (39) of said inlet ducts for heating said regeneration fluid, and
wherein said compression step is carried out by compressing the fluid in said first (11-16) of said inlet ducts downstream of said at least one first heat exchanger (33) and upstream of the branch or outlet section of said transport duct (16-17-18-19).

13. Method according to any one of claims 9 to 12 by means of a plant or plant station according to claim 1, wherein in said heat exchange step said collecting duct (3) of said at least one regenerated absorbent solution is placed in heat exchange with said supply duct (7) of said at least one absorbent solution with said at least one gas absorbed inside it, and
wherein in said flash tank (28) the separation of the fluid conveyed by said second duct (3-4) occurs, between a lighter phase exiting from the top of the flash tank (28) to feed said at least one inlet duct (14) of a regeneration fluid, and a heavier phase exiting from the bottom of said flash tank (28).

14. Method according to claim 13 by means of a plant or plant station according to claim 5, wherein said at least one inlet duct (21-12) of a regeneration fluid or for transporting heating fluid (20-11) in heat exchange with said outlet duct (9-10, 8-10) of a gaseous compound and said at least one inlet duct (14) of a regeneration fluid coming from the top of said flash tank (28) both convey in a same common duct (15) before the introduction into said regeneration column (25) or the heat exchange with said second of the inlet ducts (39) of a regeneration fluid, and
wherein said at least one compressor (30) intercepts said common duct (15).

15. Method according to claim 13 or 14 by means of a plant or plant station according to claim 3, wherein in said heat exchange step said at least one transport duct (20, 40, 41) is placed in heat exchange with said at least one outlet duct or line (8) of a gaseous compound.

16. Method for the absorption of at least one gas from gaseous mixtures by means of a plant according to claim 7 or 8, comprising:
- supplying a gaseous mixture to the bottom of said at least one absorption column (24) through said first supply duct (1) and introducing at least one absorbent solution so that it enters through said at least one first inlet duct (5) at the head of said absorption column (24), so that following the reaction between the gaseous mixture and the absorbent solution in said absorption column (24) said gaseous mixture is obtained in said first outlet duct (2), completely or partially devoid of said at least one gas by said at least one absorbent solution, and in said first collecting duct (6) said at least one absorbent solution with said at least one gas absorbed inside it,
- proceeding with the steps of a method according to any one of claims 9 to 15, in such a way that said at least one regenerated absorbent solution conveyed along said collecting duct (3) from the bottom of said regeneration column (25) can be sent back to said first inlet duct or line (5).
